# EUROPEAN PATENT SPECIFICATION

(11) **EP 1 095 254 B1**
(45) Date of publication and mention of the grant of the patent: **24.11.2004**
(21) Application number: 99932990.7
(22) Date of filing: 15.07.1999
(51) Int. Cl.: G01N 3/52

(54) **SURFACE TESTING EQUIPMENT AND METHOD**
VERFAHREN UND VORRICHTUNG ZUR OBERFLÄCHENPRÜFUNG
EQUIPEMENT ET PROCEDE SERVANT A VERIFIER UNE SURFACE

(30) Priority: 15.07.1998 GB 9815260; 21.08.1998 GB 9818196
(43) Date of publication of application: 02.05.2001
(73) Proprietor: Micro Materials Limited, Wrexham LL13 7YP (GB)
(72) Inventor: SMITH, James, Frank, Ruthin, Denbyshire LL15 2DE (GB)
(74) Representative: Pearce, Anthony Richmond
(86) International application number: PCT/GB1999/002145
(87) International publication number: WO 2000/004368

(56) References cited:
- EP-A- 0 295 755
- FR-A- 2 533 030
- US-A- 4 467 652
- US-A- 5 450 745
- DATABASE WPI Section EI, Week 199301 Derwent Publications Ltd., London, GB; Class S03, AN 1993-007899 XP002119591 -& SU 1 714 447 A (UCHAEV YU F), 23 February 1992 (1992-02-23)
- DATABASE WPI Section EI, Week 198437 Derwent Publications Ltd., London, GB; Class S03, AN 1984-230030 XP002119592 -& SU 1 067 407 A (AS BELO APPL PHYS), 15 January 1984 (1984-01-15)

## Description

This invention relates to surface testing equipment and to a method of measuring surface properties e.g. surface toughness and adhesion between surfaces such as between a film and a substrate. By "surface toughness" as used herein is meant surface fracture resistance to repeated impacts, for example such as occur when a surface is subjected to multiple impacts or erosive wear.

A number of techniques are routinely used to measure the mechanical properties of wear-resistant coatings and surfaces. These include, for instance, scratch testing, indentation testing and pin-on-disk wear testing. However, it is often difficult or impossible to correlate results obtained from such tests with actual product performance.

Measurement of the adhesion of a thin film to a substrate is often performed by means of scratch testing. In this technique, a probe e.g. a diamond stylus is slowly drawn across the surface of a specimen under either a constant load or a progressively increasing load until failure of the interface occurs. Failure is detected by several methods, e.g. (i) by the detection of an abrupt change in the frictional force between the diamond and the substrate; (ii) by microscopic observation of the so-called wear track; or (iii) by detection of a burst of released acoustic energy.

Scratch testing generates elastic and plastic deformation around the probe tip. The details of such deformation are generally extremely complex with both the film and the substrate usually being affected. The critical load for film failure depends not only on the interfacial adhesion, but also on the mechanical properties of the film and substrate materials; thus it is usually not possible to convert scratch test data into absolute adhesion energy values. In addition, the applied force can actually cause re-adhesion of the film in some cases.

In some cases, adhesion failure can also be detected through straightforward indentation measurements. Basically, a sharp diamond is impressed into the surface such that it penetrates the film and substrate. Eventually, the stress generated may be sufficient to cause interfacial failure, which may be detected by acoustic emission or diamond displacement monitoring.

SU 1714447 discloses a test device, for measuring the elastic properties of hard materials, having an indenter on a pendulum which during an auto-oscillation process impacts the sample being tested. An electromagnet imparts an impulse to the indenter to compensate for loss of energy during the impact. The device also possesses a movement sensor for the indenter, signals from this pass through an amplifier to the electromagnet causing a pulse. The movement sensor also acts to count the number of oscillations during a set time.

It is an object of the present invention to provide an improved surface testing equipment and methods suitable for measuring a surface property such as surface toughness or adhesion between surfaces.

According to the present invention, there is provided surface testing equipment, comprising a holder for holding a specimen to be tested at a predetermined location; a test probe mounted for recoil movement away from the predetermined location in a predetermined direction; means for urging the test probe towards the predetermined location; means for oscillating either the holder or the test probe so as to cause, in use, repeated impacts between the test probe and a specimen; and means for continuously monitoring the position of the test probe.

Said testing equipment is capable of being used for surface toughness testing or adhesion testing depending upon the nature of the specimen and the mode of operation of the equipment.

Also according to the present invention, there is provided a method of measuring surface properties of a specimen, said method comprising the steps of:-
(a) mounting the specimen in a holder;
(b) urging a test probe which is capable of recoil movement away from the specimen into contact with the specimen;
(c) oscillating either the specimen holder or the test probe so as to cause repeated impacts between the specimen and the test probe; and
(d) monitoring the position of the test probe whilst the specimen or the test probe is being oscillated.

It is to be appreciated that it is possible to generate surface damage through recoil and subsequent collision between the probe and the specimen and to detect the evolution and progress of such damage by continuously monitoring the change in the position of the test probe. Furthermore, the degree of recoil can be used to determine the energy absorbed at the contact location between the specimen and the impacting test probe. Thus, the method is particularly suited to measuring surface toughness.

The influence of repetitive contact between the probe and one site on the specimen can be assessed by this method. However, it is possible to measure the effects of impact at a site or sites adjacent to a prior impact site by effecting relative movement between the holder and the probe in a direction transverse (eg. perpendicular) to that of the oscillatory motion applied to the specimen holder or test probe. This permits the influence of large-area damage emanating from an impact site to be determined. Such a technique is useful in assessing many types of surface or coating failure situations, e.g. in tool bit coatings which invariably impact a workpiece at slightly different locations due to vibration.

For brittle coatings, such transverse movement generates radial damage emanating from each impact site, which is itself subjected to further impact events. For some coatings, the individual impacts lead to symmetrical localised interfacial stresses and interfacial failure, which makes film removal due to the underlying steady load relatively easy. For some other coatings, the production of indentations together with specimen translation leads to easier removal since a delamination force is applied to the coating cross section once the indentation has been made. Thus, if the specimen comprises a film and a substrate, this technique is particularly suited to adhesion testing (i.e. measuring the adhesion of the film to the substrate).

Preferably, said oscillating means are arranged to oscillate the specimen holder.

The means for urging the test probe towards the predetermined location may be provided by mounting the test probe so that it is urged by gravity towards said location (un-loaded) or another force-applying means may be provided (pre-loaded). The test probe may be freely mounted for movement towards and away from the specimen holder on a pendulum arm which may be acted upon by a force-applying means such as a coil and magnet assembly acting on the arm to urge the probe towards the specimen in use.

The means for oscillating the holder or test probe may comprise means for causing elastic waves to be applied to the specimen in use, and may for example be (i) a source of sound waves (e.g. a loudspeaker and a signal generator connected therewith), (ii) a piezoelectric actuator connected to a signal generator, or (iii) for higher load impacts, a solenoid with a plunger, or a mass on a pendulum, which periodically makes contact with the specimen holder in use in the recoil direction. In the last example, (iii), test probe displacement data can be collected for a time after each impact before the next impact occurs. Some arrangements may not employ elastic waves, e.g. specimen oscillation may be effected at low frequencies such that the test probe is simply accelerated away from the surface.

The impact energy between probe and specimen is determined by the oscillation amplitude and frequency and its effect is dependent, inter alia, upon the underlying load applied by the urging means to the test probe and the nature of the specimen. For example, if the applied load is relatively high and/or the amplitude of the oscillations is relatively low, then, depending upon the nature of the specimen, the surface of the specimen may flex such that contact between the specimen and test probe is maintained between impacts. Such flexing is useful for investigating adhesion (and particularly fatigue-type failure) in multilayer specimens such as layered polymeric materials. Alternatively, if the applied load is relatively low (eg. only gravity) and/or the amplitude of oscillations is relatively high, then the specimen and the test probe may bounce apart between impacts.

Each of the oscillation amplitude, frequency and underlying load may be varied independently.

In a particularly preferred adhesion testing method, the load applied to the test probe is increased linearly as relative movement takes place between the test probe and specimen holder in a direction transverse to the oscillatory motion.

The position of the test probe may be monitored capacitatively by providing a fixed capacitor plate spaced on the opposite side of the test probe to the specimen holder and mounting another capacitor plate for movement with the test probe so that movement of the probe is accompanied by a capacitance change.

It is also possible to collect probe positional data before and after the oscillating means is actuated. In this way, it is possible to gather data on the position of the probe when in contact with the specimen both before and after repeated impact. This enables differences between brittle and non-brittle materials to be assessed and also enables surface lifetime data for brittle materials to be obtained. In this regard, it is to be understood that, with brittle materials, the surface may break up and so cause the test probe to be further away from the holder after repeated impact than at the generated. In contrast, ductile specimens may show only indentation behaviour.

Embodiments of the present invention will now be described, by way of example, with reference to the accompanying drawings in which:-
Fig. 1 is a schematic view of a basic pendulum arrangement to which the teachings of the present invention can be applied to result in testing equipment in accordance with the present invention,
Fig. 2 is a view of one embodiment of testing equipment according to the present invention incorporating the basic pendulum arrangement of Fig. 1,
Fig. 3 is a chart showing impact data on a specimen having a fused quartz surface collected using the equipment of Fig. 2,

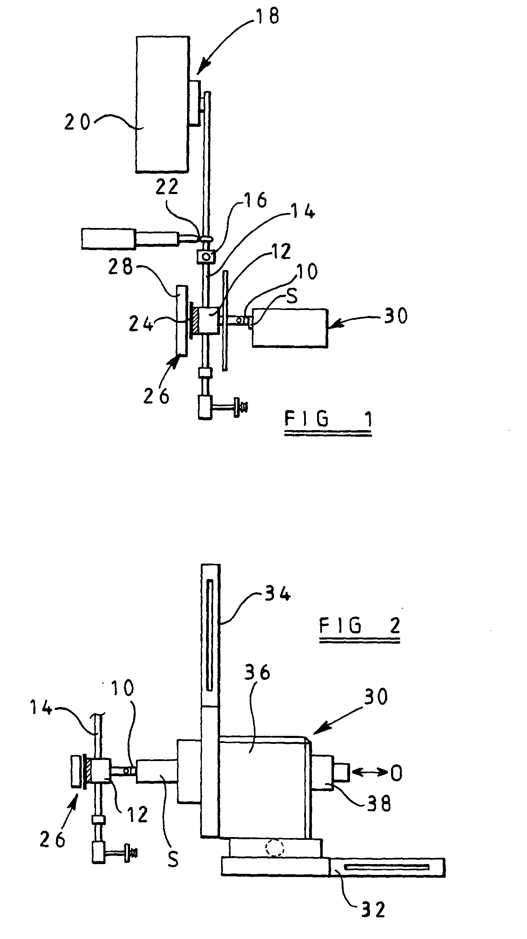

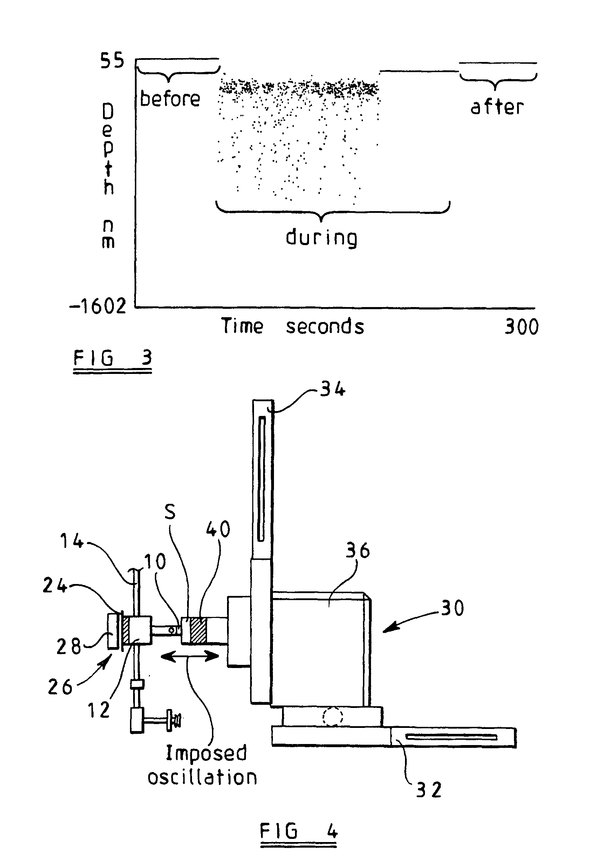

Fig. 3 is a chart showing impact data on a specimen having a fused quartz surface collected using the equipment of Fig. 2,
Fig. 4 is a second embodiment of testing equipment according to the present invention, and

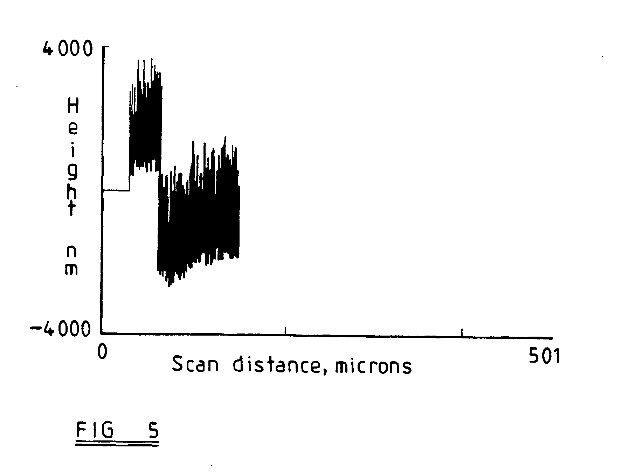

Fig. 5 is a chart showing impact data on a specimen comprising a titanium nitride coating on a silicon substrate.

Referring now to Fig. 1 of the drawings, the basic pendulum arrangement comprises a test probe 10 carried by a probe holder 12 on a pendulum arm 14 mounted on an essentially frictionless pivot 16. The pendulum arm 14 is extended above the pivot 16 and, at its upper end, carries a coil 18 which is disposed adjacent a magnet 20. A limit stop 22 prevents excess movement of the coil 18 towards the magnet 20 when the former is energised.

The probe holder 12 carries a conductive plate 24 which forms a parallel plate capacitor 26 with a fixed plate 28. The capacitor 26 is mounted in a capacitance bridge circuit (not shown). It will be understood that movement of the plate 24 relative to the plate 28 is accompanied by a capacitance change which can be detected by the capacitance bridge circuit. In this way, actual displacements of the test probe 10 can be measured capacitatively.

In this embodiment, the test probe 10 is a 25 µm radius spherical diamond. However, a wide range of probe geometries may be used.

The arrangement further comprises a specimen holder assembly 30 to which a specimen S (in this embodiment, a fused quartz specimen) is rigidly attached, for example by means of an instant adhesive (e.g. a cyanoacrylate adhesive commonly known as "Superglue"). This rigid attachment eliminates unnecessary compliance during impact testing.

In an alternative embodiment (not shown) the magnet and coil arrangement is omitted and in use, the test probe is held against the specimen surface only by gravity acting on the pendulum arm.

In accordance with the invention, and as illustrated in Fig. 2, the basic pendulum arrangement described above with reference to Fig. 1 is modified by the provision of an oscillatable holder assembly 30. The holder assembly 30 is mounted for 3-axis movement whereby the holder assembly 30 and specimen can be adjusted in position in two mutually perpendicular directions which are themselves substantially perpendicular to the direction of movement of the test probe 10 about the axis of pivot 16. The third axis of movement of the holder assembly 30 is towards and away from the test probe 10. Guides, of which only two are shown at 32 and 34, are provided for guiding the main body 36 of the holder assembly 30 along its three mutually perpendicular axes.

At the rear of the holder assembly 30 (i.e. on the opposite side of the holder assembly 30 to the specimen S), there is provided a displacement actuator 38 which is arranged to impose oscillatory movement to the holder assembly 30 as is shown by the double headed arrow O in Fig. 2. In this embodiment, the displacement actuator 38 comprises a loudspeaker and signal generator connected therewith, and is arranged to generate elastic waves in the assembly 30 and thus in the specimen S.

In use, the specimen S is brought into contact with the test probe 10 by moving the holder assembly 30 relative to guide 32. A fixed normal load is then applied between the probe 10 and the specimen S by means of the magnet 20 and the coil 18 located at the top of the pendulum arm 14 (Fig. 1). At this stage, the actual position of the diamond probe 10 can be measured capacitatively using the capacitive bridge circuit 26.

The displacement actuator 38 is then energised to generate elastic waves timed so that repeated recoil of the test probe 10 and impact between the probe and the surface of the specimen S take place. It will be appreciated that in other embodiments the load applied by means of the magnet 20 and the coil 18 can be increased during operation of the displacement actuator (the load and its rate of change may be under the control of a computer). After a certain period, the recoil of the probe 10 abruptly stops despite the fact that the displacement actuator 38 continues to generate elastic waves. This is interpreted as energy absorption due to surface damage to the brittle quartz surface of the specimen S generated during pendulum recoil and collision between the probe 10 and the specimen S.

Finally, the displacement actuator 38 is switched off to leave the probe 10 stationary on the surface of the specimen S. However, the surface position of the probe 10 is detected as being slightly higher than the starting position due to the finite volume of the surface damage generated.

The position of the probe 10 before energisation, during energisation and after energisation of the displacement actuator 38 is measured by a continuous depth recording indentation instrument and is illustrated in Fig. 3 where the position of the probe 10 is indicated by the "depth" axis. The stage at which recoil of the probe stops can be seen clearly in Fig. 3.

In this manner, data can be generated on the surface fracture resistance of a variety of specimens, such data giving an indication of actual product performance.

Apart from the influence of surface damage on recoil of the test probe, fracture events occurring on impact can be monitored by a acoustic emission detector.

Referring to Fig. 4, the equipment of Fig. 2 is modified so that the displacement actuator 38 connected to the rear of main body 36 of the holder assembly 30, is replaced by a piezoelectric actuator 40 interposed between the holder assembly 30 and specimen S having thereon a film to be tested. Other parts of the equipment are accorded the same reference numerals as in Fig. 2.

In one particular method of using the equipment shown in Fig. 4, the specimen S is oscillated by means of the piezoelectric actuator 40 connected to a signal generator, such that the test probe 10 is caused to "bounce" on the surface of the film on the specimen S.

The impact energy is determined by the oscillation amplitude and frequency and the underlying applied load. Film failure is detected through monitoring changes in probe displacement as the specimen S is scanned underneath the probe 10. In some cases, when the film fails catastrophically there is an abrupt and easily recognised shift in the average probe position.

Before the measurements are started, the specimen S is brought into contact with the test probe by moving the holder assembly 10 relative to the guide 32. A small normal load is then applied by means of the magnet and coil loading assembly located at the top of the pendulum arm 14. Specimen movement at right angles to the probe axis is then started. (In other surface tests, it may be desirable to move the specimen S at some other angle to the probe axis eg. 45° so that the specimen S is moved towards the probe 10). After an initial constant load contact period without specimen oscillation to allow the initial surface position to be identified, the desired background normal load is applied and the impact excitation is started simultaneously. Test probe displacement data is collected throughout. An example is shown in Fig. 5 where probe position is plotted against specimen position for a square wave oscillation with a fixed frequency of 80 Hz and a fixed amplitude. The specimen consisted of a titanium nitride coating on a silicon substrate. The step change in mean probe position is indicative of film removal. The test probe was a 25 µm radius spherical diamond and the specimen velocity was 100 nm/s.

In a slight modification of the above embodiment, the background load is increased linearly during movement of the specimen.

## Claims

1. A surface testing equipment, comprising a holder (30) for holding a specimen (S) to be tested at a predetermined location; a test probe (10) mounted for recoil movement away from the predetermined location in a predetermined direction; means (18, 20) for urging the test probe (10) towards the predetermined location; and means (38, 40) for oscillating either the holder (30) or the test probe (10) so as to cause, in use, repeated impacts between the test probe (10) and a specimen (S); **characterised in that** means for continuously monitoring the position of the test probe are provided.

2. Equipment as claimed in Claim 1, wherein means (32, 34) are provided to effect relative movement between the holder (30) and probe (10) in a direction transverse to the direction of oscillation of the holder (30) or probe (10) in use.

3. Equipment as claimed in Claim 1 or 2, wherein said oscillating means (38) are arranged to oscillate the specimen holder (30).

4. Equipment as claimed in any preceding Claim, wherein the test probe (10) is freely mounted for movement towards and away from the specimen holder (30) on a pendulum arm (14).

5. Equipment as claimed in Claim 4, wherein the urging means comprises a coil (18) and magnet (20) assembly acting on the arm (14) to urge the probe (10) towards the specimen (S) in use.

6. Equipment as claimed in any preceding Claim, wherein said oscillation means (38, 40) is arranged to apply elastic waves to the specimen (S) in use.

7. Equipment as claimed in any preceding Claim, wherein said oscillation means (38, 40) is either (i) a source of sound waves, or (ii) a piezoelectric actuator connected to a signal generator, or (iii) a solenoid with a plunger, or a mass on a pendulum.

8. A method of measuring surface properties of a specimen (S), said method comprising the steps of:-
(a) mounting the specimen in a holder (30);
(b) urging a test probe (10) which is capable of recoil movement away from the specimen (s) into contact with the specimen (S);
(c) oscillating either the specimen holder (30) or the test probe (10) so as to cause repeated impacts between the specimen (S) and the test probe (10); and
(d) monitoring the position of the test probe (10) whilst the specimen (S) or the test probe (10) is being oscillated.

9. A method as claimed in Claim 8, wherein step (c) is effected by oscillating the specimen holder (30).

10. A method as claimed in Claim 8 or 9, wherein contact is maintained between the specimen holder (30) and test probe (10) between impacts during step (c).

11. A method as claimed in Claim 8 or 9, wherein there is separation of the test probe (10) and the specimen holder (30) between impacts during step (c).

12. A method as claimed in any one of Claims 8 to 11, wherein the force applied to the test probe (10) during step (c) is constant.

13. A method as claimed in any one of Claims 8 to 11, wherein the force applied to the test probe (10) during step (c) is increased linearly.

14. A method as claimed in any one of Claims 8 to 13, wherein relative movement takes place between the specimen holder (30) and test probe (10) in a direction transverse to the oscillatory motion.

15. A method as claimed in Claim 14, wherein said relative movement is continuous relative movement.

16. A method as claimed in any one of Claims 8 to 15, wherein the position of the test probe (10) is monitored capacitatively by providing a fixed capacitor plate (28) spaced on the opposite side of the test probe (10) to the specimen holder (30) and mounting another capacitor plate (24) for movement with the test probe (10) so that movement of the probe (10) is accompanied by a capacitance change.

17. A method as claimed in any one of Claims 8 to 16, wherein probe positional data is collected before and after step (c).

## Patentansprüche

1. Oberflächenprüfvorrichtung, umfassend einen Halter (30), um einen Prüfling (S) in einer vorbestimmten Lage zu halten; eine Prüfsonde (10), die für eine Rückprallbewegung von der vorbestimmten Lage weg in einer vorbestimmten Richtung montiert ist; Mittel (18, 20), um die Prüfsonde (10) in Richtung auf die vorbestimmte Lage zu drängen; und Mittel (38, 40), um entweder den Halter (30) oder die Prüfsonde (10) hin und her zu bewegen, um beim Gebrauch wiederholte Kollisionen zwischen der Prüfsonde (10) und einem Prüfling (S) zu verursachen; **dadurch gekennzeichnet, dass** Mittel zum kontinuierlichen Überwachen der Position der Prüfsonde vorgesehen sind.

2. Vorrichtung nach Anspruch 1, wobei Mittel (32, 34) zum Bewirken einer relativen Bewegung zwischen dem Halter (30) und der Sonde (10) in einer Richtung quer zur Hin- und Herbewegungsrichtung des Halters (30) oder der Sonde (10) beim Gebrauch vorgesehen sind.

3. Vorrichtung nach Anspruch 1 oder 2, wobei das Hin- und Herbewegungsmittel (38) so angeordnet ist, dass es den Prüflingshalter (30) hin und her bewegt.

4. Vorrichtung nach einem der vorherigen Ansprüche, wobei die Prüfsonde (10) für eine Bewegung in Richtung auf den Prüflingshalter (30) hin und von diesem weg frei auf einem Pendelarm (14) montiert ist.

5. Vorrichtung nach Anspruch 4, wobei das Drängmittel eine Baugruppe aus einer Spule (18) und einem Magnet (20) umfasst, die auf den Arm (14) wirkt, um die Sonde beim Gebrauch in Richtung auf den Prüfling (S) zu drängen.

6. Vorrichtung nach einem der vorherigen Ansprüche, wobei das Hin- und Herbewegungsmittel (38, 40) die Aufgabe hat, den Prüfling (S) beim Gebrauch mit elastischen Wellen zu beaufschlagen.

7. Vorrichtung nach einem der vorherigen Ansprüche, wobei das Hin- und Herbewegungsmittel (38, 40) entweder (i) eine Schallwellenquelle oder (ii) ein mit einem Signalgenerator verbundener piezoelektrischer Aktuator oder (iii) ein Solenoid mit einem Stößel oder eine Masse an einem Pendel ist.

8. Verfahren zum Messen von Oberflächeneigenschaften eines Prüflings (S), wobei das Verfahren die folgenden Schritte umfasst:
(a) Montieren des Prüflings in einem Halter (30);
(b) Drängen einer Prüfsonde (10), die eine Rückprallbewegung von dem Prüfling (S) weg ausführen kann, in Kontakt mit dem Prüfling (S);
(c) Hin- und Herbewegen des Prüflingshalters (30) oder der Prüfsonde (10), um wiederholte Kollisionen zwischen dem Prüfling (S) und der Prüfsonde (10) zu verursachen; und
(d) Überwachen der Position der Prüfsonde (10), während der Prüfling (S) oder die Prüfsonde (10) hin und her bewegt wird.

9. Verfahren nach Anspruch 8, bei dem Schritt (c) durch Hin- und Herbewegen des Prüflingshalters (30) ausgeführt wird.

10. Verfahren nach Anspruch 8 oder 9, bei dem der Kontakt zwischen dem Prüflingshalter (30) und der Prüfsonde (10) zwischen Kollisionen in Schritt (c) erhalten bleibt.

11. Verfahren nach Anspruch 8 oder 9, bei dem zwischen Kollisionen in Schritt (c) eine Trennung zwischen der Prüfsonde (10) und dem Prüflingshalter (30) besteht.

12. Verfahren nach einem der Ansprüche 8 bis 11, wobei die in Schritt (c) auf die Prüfsonde (10) aufgebrachte Kraft konstant ist.

13. Verfahren nach einem der Ansprüche 8 bis 11, wobei die in Schritt (c) auf die Prüfsonde (10) aufgebrachte Kraft linear erhöht wird.

14. Verfahren nach einem der Ansprüche 8 bis 13, wobei eine relative Bewegung zwischen dem Prüflingshalter (30) und der Prüfsonde (10) in einer Richtung quer zu der Hin- und Herbewegung erfolgt.

15. Verfahren nach Anspruch 14, wobei die relative Bewegung eine kontinuierliche relative Bewegung ist.

16. Verfahren nach einem der Ansprüche 8 bis 15, wobei die Position der Prüfsonde (10) kapazitiv überwacht wird, indem eine feste Kondensatorplatte (28) vorgesehen wird, die auf der gegenüberliegenden Seite der Prüfsonde (10) von dem Prüflingshalter (30) beabstandet ist, und indem eine weitere Kondensatorplatte (24) für eine Bewegung mit der Prüfsonde (10) montiert wird, so dass eine Bewegung der Sonde (10) von einer Kapazitätsänderung begleitet wird.

17. Verfahren nach einem der Ansprüche 8 bis 16, wobei die Sondenpositionsdaten vor und nach Schritt (c) gesammelt werden.

## Revendications

1. Équipement d'essai de surface, comprenant un support (30) destiné à supporter une éprouvette (S) à contrôler à un emplacement prédéterminé; une sonde d'essai (10) montée de façon à pouvoir s'éloigner avec un mouvement de recul de l'emplacement prédéterminé dans une direction prédéterminée; des moyens (18, 20) pour solliciter la sonde d'essai (10) vers l'emplacement prédéterminé; et des moyens (38, 40) pour osciller soit le support (30), soit la sonde d'essai (10) de façon à provoquer, en service, des impacts répétés entre la sonde d'essai (10) et une éprouvette (S); **caractérisé en ce que** des moyens destinés à surveiller en continu la position de la sonde d'essai sont prévus.

2. Équipement selon la revendication 1, dans lequel des moyens (32, 34) sont prévus pour effectuer un déplacement relatif entre le support (30) et la sonde d'essai (10) dans une direction transversale à la direction d'oscillation du support (30) ou de la sonde (10) en service.

3. Équipement selon la revendication 1 ou 2, dans lequel ledit moyen d'oscillation (38) est configuré pour faire osciller le support d'éprouvette (30).

4. Équipement selon l'une quelconque des revendications précédentes, dans lequel la sonde d'essai (10) est montée librement pour s'approcher et s'éloigner du support d'éprouvette (30) sur un bras pendulaire (14).

5. Équipement selon la revendication 4, dans lequel les moyens de sollicitation comprennent un ensemble à bobine (18) et aimant (20) agissant sur le bras (14) pour solliciter la sonde (10) vers l'éprouvette (S) en service.

6. Équipement selon l'une quelconque des revendications précédentes, dans lequel lesdits moyens d'oscillation (38, 40) sont configurés pour appliquer des ondes élastiques sur l'éprouvette (S) en service.

7. Équipement selon l'une quelconque des revendications précédentes, dans lequel lesdits moyens d'oscillation (38, 40) sont soit (i) une source d'ondes acoustiques, soit (ii) un actionneur piézoélectrique relié à un générateur de signaux, soit (iii) un solénoïde doté d'un noyau plongeur, soit une masse sur un pendule.

8. Procédé de mesure des propriétés de surface d'une éprouvette (S), ledit procédé comprenant les étapes consistant à:
(a) monter l'éprouvette dans un support (30);
(b) solliciter une sonde d'essai (10) qui est capable de s'éloigner de l'éprouvette (S) par un mouvement de recul, en contact avec l'éprouvette (S);
(c) osciller soit le support d'éprouvette (30), soit la sonde d'essai (10) de façon à provoquer des impacts répétés entre l'éprouvette (S) et la sonde d'essai (10); et
(d) surveiller la position de la sonde d'essai (10) pendant que l'éprouvette (S) ou la sonde d'essai (10) est oscillée.

9. Procédé selon la revendication 8, dans lequel l'étape (c) est effectuée en oscillant le support d'éprouvette (30).

10. Procédé selon la revendication 8 ou 9, dans lequel le contact est maintenu entre le support d'éprouvette (30) et la sonde d'essai (10) entre les impacts durant l'étape (c).

11. Procédé selon la revendication 8 ou 9, dans lequel il existe une séparation de la sonde d'essai (10) et du support d'éprouvette (30) entre les impacts durant l'étape (c).

12. Procédé selon l'une quelconque des revendications 8 à 11, dans lequel la force appliquée à la sonde d'essai (10) durant l'étape (c) est constante.

13. Procédé selon l'une quelconque des revendications 8 à 11, dans lequel la force appliquée à la sonde d'essai (10) durant l'étape (c) est augmentée linéairement.

14. Procédé selon l'une quelconque des revendications 8 à 13, dans lequel un déplacement relatif a lieu entre le support d'éprouvette (30) et la sonde d'essai (10) dans une direction transversale au mouvement oscillatoire.

15. Procédé selon la revendication 14, dans lequel ledit déplacement relatif est un déplacement relatif continu.

16. Procédé selon l'une quelconque des revendications 8 à 15, dans lequel la position de la sonde d'essai (10) est surveillée de façon capacitive en disposant une plaque de condensateur fixe (28) à une certaine distance, du côté opposé de la sonde d'essai (10), par rapport au support d'éprouvette (30) et en montant une autre plaque de condensateur (24) qui se déplace avec la sonde d'essai (10), de sorte que le déplacement de la sonde (10) s'accompagne d'une variation de capacité.

17. Procédé selon l'une quelconque des revendications 8 à 16, dans lequel les données de position de sonde sont collectées avant et après l'étape (c).
